# EUROPEAN PATENT SPECIFICATION

(11) **EP 1 638 351 B1**
(45) Date of publication and mention of the grant of the patent: **19.11.2008**
(21) Application number: 04738300.5
(22) Date of filing: 28.06.2004
(51) Int. Cl.: H04Q 7/00, H04Q 7/38

(54) **A PROCESSING METHOD OF LOCATION AREA CHANGE INFORMATION REQUEST**
VERARBEITUNGSVERFAHREN EINER STANDORTBEREICHSWECHSELINFORMATIONSANFORDERUNG
PROCEDE DE TRAITEMENT DE LOCALISATION D'UNE DEMANDE DE DONNEES DE CHANGEMENT DE ZONE

(30) Priority: 26.06.2003 CN 03148005
(43) Date of publication of application: 22.03.2006
(73) Proprietor: Huawei Technologies Co., Ltd., 518129 Longgang District, Shenzhen (CN)
(72) Inventor: DUAN, Xiaoqin, Longgang District, Shenzhen 518129 (CN)
(74) Representative: Mounteney, Simon James
(86) International application number: PCT/CN2004/000702
(87) International publication number: WO 2004/114689

(56) References cited:
- WO-A-01/69951
- WO-A-03/005750
- CN-A- 1 396 784
- US-A- 6 101 388
- US-A1- 2002 183 077
- NOKIA: "Addition of mobile based change of area event to deferred location request" 3GPP TSG SA WG2 #31, TDOC S2-031194, [Online] 11 April 2003 (2003-04-11), pages 1-25, XP002390465 Retrieved from the Internet: URL:http://www.3gpp.org/ftp/tsg_sa/WG2_Arc h/TSGS2_31_Seoul/tdocs/> [retrieved on 2006-09-07]
- NOKIA: "Out of area event and area verfification" 3GPP TSG SA WG2 #32, TDOC S2-031759, [Online] 7 May 2003 (2003-05-07), pages 1-5, XP002390466 Retrieved from the Internet: URL:http://www.3gpp.org/ftp/tsg_sa/WG2_Arc h/TSGS2_32_San_Diego/tdocs/> [retrieved on 2006-09-07]
- HUAWEI, CHINA MOBILE: "Introduction of location estimate in the change of area event procedure" 3GPP TSG SA WG2 #34, TDOC S2-033124, [Online] 8 August 2003 (2003-08-08), pages 1-7, XP002390467 Retrieved from the Internet: URL:http://www.3gpp.org/ftp/tsg_sa/WG2_Arc h/TSGS2_34_Brussels/tdocs/> [retrieved on 2006-09-07]
- 3GPP: "Technical Specification Group services and System Aspects; Functional stage 2 description of LCS (Release 6)" 3GPP TS23.271 V6.3.0, [Online] March 2003 (2003-03), pages 1-94, XP002390468 Retrieved from the Internet: URL:http://www.3gpp.org/ftp/Specs/archive/ 23_series/23.271/> [retrieved on 2006-09-07]

## Description

### Field of the Technology

The present invention relates to location technique, more particularly to a method for processing location request of change of area event.

### Background of the Invention

For Location Service (LCS) of mobile communication network, location information of target User Equipment (UE) is obtained by location technique, wherein UE demotes UE terminal to be located in mobile communication network, and location information can be either geographical latitude and longitude information or location of local streets. Location estimate of target UE obtained by LCS system can be provided to target UE for self positioning of the target UE; or provided for communication system itself, for zonal charging or operation maintenance; location information thereof can also be provided to other client application ends requesting for location of target UE, such as organizations and individuals, for supplement service. Therefore, location service is of wide application in terms of emergency succor, vehicle guidance, intelligence traffic system, work dispatching, team management, mobile yellow page inquiry and network performance enhancement, etc. LCS specifications as well as function mode, structure, state description and message flow of the whole LCS system are illustrated in The 3rd Generation Partnership Project (3GPP).

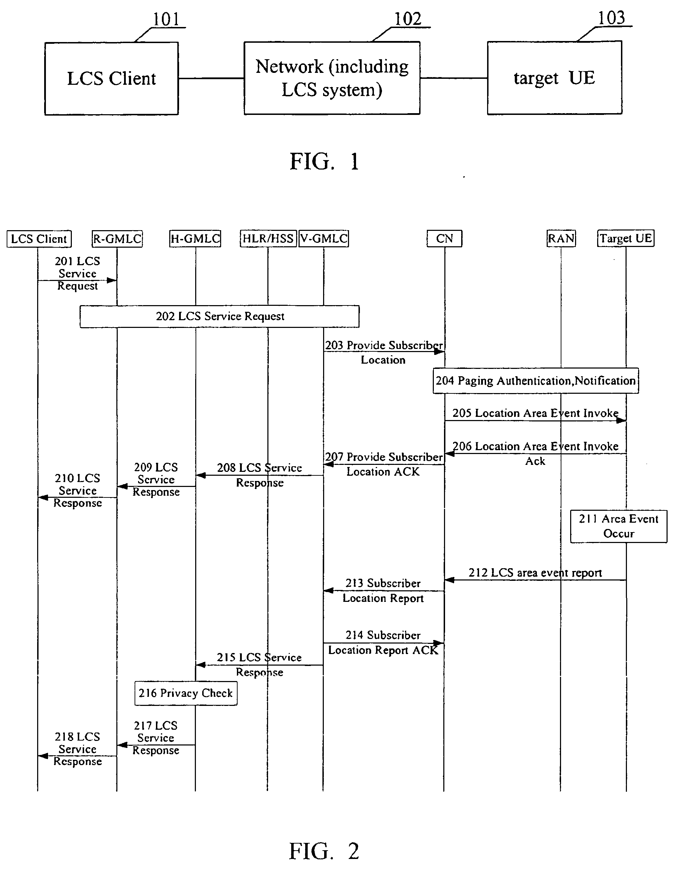

Figure 1 is a schematic diagram illustrating logic structure of location service, as shown in figure 1, LCS Client 101 requests network 102 with LCS system to provide location estimate of target UE 103, network 102 with LCS system checks legality authentication of LCS Client 101 to determine whether target UE 103 allows this LCS Client 101 to request for its location information, if LCS Client 101 passes the legality authentication check of network 102 with LCS system, network 102 with LCS system will locate target UE 103 and then provide location estimate of target UE 103 to LCS Client 101; otherwise, network 102 with LCS system will reject the location information request of LCS Client 101 toward target UE 103.

In LCS system, function logic entities for implementing location service comprise Gateway Mobile Location Center (GMLC), user data storage server (HLR/HSS), Core Network (CN) and Radio Access Network (RAN). GMLC may further comprise Requesting GMLC (R-GMLC), Home GMLC (H-GMLC) and Visited GMLC (V-GMLC). R-GMLC is a GMLC for receiving the location information request initiated by LCS Client to target UE, H-GMLC is a GMLC which the target UC belongs to, V-GMLC is the GMLC in the network with LCS system that target UE visits, namely the GMLC that target UE is currently located. R-GMLC, H-GMLC and V-GMLC can be the same physical entity, or be different physical entities.

At present, location request of change of area event is defined in 3GPP specification, and procedure thereof is also defined. Location request of change of area event means that LCS Client pre-specifies target area coverage and trigger events of delivering LCS area event report, like target UE entering, leaving or locating in specified area coverage, delivering LCS area event report to LCS Client, LCS system transmits information, like the specified target area coverage and change of area event, to target UE, then target UE stores the information like the specified target area coverage and change of area event, meanwhile starts corresponding application program, when the application program detects change of area event, like target UE entering, leaving or locating in specified area coverage, LCS Client delivers LCS area event report to the LCS system, and LCS system will forward this LCS area event report to corresponding LCS Client, so as to notify corresponding LCS Client that specified change of area event has occurred. In addition, LCS Client can also appoint target UE to report number of times of delivering LCS area event report, for example, only delivering LCS area event report once, or periodically delivering the report in a specified time range. To sum up, by utilizing location request of change of area event, LCS Client can conveniently define some tracking and monitoring location services, for instance, kid tracking, pet tracking and so on, so that location service can be widely applied in tracking and monitoring field.

Because progress toward location request of change of area event relates to GMLC and CN where target UE is currently located, as well as GMLC and CN that covers the specified target area scope, it is required that GMLC and CN where target UE is currently located as well as GMLC and CN that covers the specified target area scope support progress toward location request of change of area event.

3GPP TSG SA WG2 #31, NOKIA: "Addition of mobile based change of area event to deferred location request" discloses a procedure for a Deferred Location Request where the Location Request Report is returned to the network by the UE following an Area Event.

Figure 2 is a message interaction drawing illustrating location request of change of area event procedure, as shown in figure 2, message interaction of location request of change of area event procedure comprises the following steps:
Step 201: LCS Client sends LCS Service Request to R-GMLC, wherein the LCS Service Request carries target UE identifier, the specified target area coverage and change of area event, wherein change of area event can be target UE entering, leaving or locating in specified area coverage, delivering LCS area event report; this LCS Service Request can also carry effective time range of LCS Service Request, like start time or end time, as well as number of times that LCS Service Request demands LCS area event report to deliver, if it is required to deliver LCS area event report multiply, this LCS Service Request should further carry time interval for periodically delivering LCS area event report. In addition, this LCS Service Request also carries country code of the country that the specified target area coverage belongs to. This LCS Service Request is the above described location request of change of area event.
Step 202: after receiving LCS Service Request, R-GMLC forwards this LCS Service Request to H-GMLC, then H-GMLC checks legality authentication of LCS Client, so as to determine whether this LCS Service Request is allowed by target UE to provide location information of the target UE for this LCS Client, if LCS Client is legally authenticated, H-GMLC will send LCS Service Request to the V-GMLC that target UE is located; otherwise, H-GMLC sends authentication failure acknowledgement to R-GMLC, so as to notify R-GMLC to reject the location request of change of area event sent by LCS Client in terms of target UE, R-GMLC notifies LCS Client that the location request of change of area event initiated by this LCS Client is rejected, and location request of change of area event procedure is ended.
Step 203: after receiving LCS Service Request, V-GMLC will transform the specified target area coverage carried in this LCS Service Request into area identifier that can be identified by PLMN network, and send Provide Subscriber Location to CN, wherein this Provide Subscriber Location carries target UE identifier, specified target area coverage which is transformed into PLMN network geological format as well as the trigger event of delivering LCS area event report; corresponding with information carried in LCS Service Request, this Provide Subscriber Location may carry number of times of delivering LCS area event report, if it is required to deliver LCS area event report multiply, this Provide Subscriber Location should carry time interval for periodically delivering LCS area event report.
Step 204: when detecting that target UE is in idle mode, CN will start paging toward target UE, checking legality authentication of and encoding the target UE, so as to check if this target UE is a legal network subscriber; further, CN that target UE is currently located can send private check notification to target UE, so as to notify target UE there is a LCS Client requesting its location information, then target UE will personally check whether to allow LCS system to provide location information of this target UE for the LCS Client.
Step 205∼step 206: CN sends Location Area Event Invoke request to target UE through RAN, wherein information carried by this Location Area Event Invoke request is corresponding with that carried by LCS service request. After receiving Location Area Event Invoke, target UE stores the specified target area coverage and change of area event, if this Location Area Event Invoke requires to multiply deliver LCS area event report, target UE need further store the time interval of periodical deliver LCS area event report, then target UE starts relevant application program of its own and monitors occurrence of change of area event; target UE returns Location Area Event Invoke Ack to CN, so as to notify CN that current location information request has been accepted and has been processed accordingly.
Step 207∼step 210: after receiving Location Area Event Invoke Ack, CN will send Provide Subscriber Location Ack to V-GMLC, in order to notify V-GMLC that current location information request has been accepted. After receiving Location Area Event Invoke Ack, V-GMLC sends LCS Service Response to H-GMLC, so as to notify H-GMLC that current location information request has been accepted. After receiving LCS Service Response, H-GMLC sends LCS Service Response to R-GMLC, so as to notify R-GMLC that current location information request has been accepted. After receiving LCS Service Response, R-GMLC sends LCS Service Response to LCS Client, so as to notify LCS Client that current location information request has been accepted.
Step step 212: when change of area event occurs, namely target UE entering, leaving or being located in specified target area coverage, target UE will send LCS area event report to CN through RAN, so as to notify CN that change of area event has occurred.
Step 213∼step 214: after receiving LCS area event report, CN will send Subscriber Location Report to V-GMLC, so as to notify V-GMLC that the change of area event of target UE has occurred. After receiving Subscriber Location Report, V-GMLC sends Subscriber Location Report Ack to CN, so as to notify CN that Subscriber Location Report of target UE has been received, here, CN can generate a call detail record for current location information request.
Step 215∼step 218: after sending Subscriber Location Report Ack to CN, V-GMLC sends LCS Service Response to H-GMLC, so as to notify H-GMLC that change of area event of target UE has occurred. After receiving LCS Service Response, H-GMLC checks legality authentication of LCS Client, so as to guarantee that the location information provided to the LCS Client is in the scope of authorization of LCS Client. If LCS Client passes the authentication by H-GMLC, H-GMLC will send LCS Service Response to R-GMLC, so as to notify R-GMLC that the change of area event of target UE has occurred. After receiving LCS Service Response, R-GMLC will send LCS Service Response to LCS Client, so as to notify LCS Client that the change of area event of target UE has occurred.

The said V-GMLC in step 211∼step 218 is a GMLC that target UE is currently located and can cover the specified target area coverage, here, this V-GMLC can be either the same as or different from the GMLC of V-GMLC in step 202∼step 210; in the same way, said CN in step step 218 is a CN that target UE is currently located and can cover the specified target area coverage, here, this CN can be either the same as or different from the CN in step 202∼step 210.

If time interval of periodical delivering LCS area event report and number of times of delivering LCS area event report are carried in location request of change of area event, the time interval of delivering LCS area event report, which is reported to CN by target UE, should not be less than the time interval of delivering LCS area event report, which is set in location request of change of area event, and total times of delivering LCS area event report should not exceed the number of times set in location request of change of area event, wherein each procedure of delivering LCS area event report is the same as that of step 211∼step 218 by and large.

It can be seen from the above-described progress of location request of change of area event defined in 3GPP that, after target UE detects that change of area event has occurred, LCS system can only provide LCS area event report of target UE to LCS Client, wherein the LCS area event report can only notify LCS Client that target UE has entered, left or is in a specified target area coverage, if LCS Client requests to obtain not only LCS area event report of target UE, but also detailed location estimate of target UE, the above process is not able to satisfy such requirement of LCS Client, so that LCS Client cannot obtain detailed location estimate of target UE at all.

A PCT application WO 03/005750 A relates to a method for locating a wireless terminal device in cellular network in response to a location request, wherein quality information is added to the location request in order to define a requested quality of service.

### Summary of the Invention

Therefore, the main object of the present invention is to provide a method for processing location request of change of area event, so that location service system can provide not only LCS area event report of target User Equipment (UE) to LCS Client, but also further provide detailed location estimate of target UE to LCS Client according to demand of LCS Client.

In order to obtain the above object, a method for processing an LCS Service Request is provided in the present invention, wherein, the method includes steps of :
an LCS system sending an LCS Area Event Invoke request for detecting an predetermined area event, said request being sent to a target UE upon receiving an LCS Service Request from an LCS client;
the target UE returning an LCS Area Event Report to the LCS system when the area event occurs;
the LCS system determining from the LCS Service Request or the LCS Area Event Report whether the LCS Client needs a location estimate of the target UE, after receiving the LCS Area Event Repart; and
the LCS system sending to the LCS Client, an LCS Service Response indicating that the predetermined area event occurs if the LCS Client does not need a location estimate of the target UE; or
the LCS system locating the target UE and sending an LCS Service Response with a location estimate of the target UE to the LCS Client if the LCS Client needs a location estimate of the target UE.

Wherein said determining from the LCS Area Event Report whether the LCS Client needs a location estimate of the target UE includes:
a CN in the LCS system determining whether there is an indication for locating the target UE in the LCS Area Event Report returned by the target UE;
if there is an indication for locating the target UE in the LCS Area Event Report, the LCS Client is determined to need a location estimate of the target UE; and
if no indication for locating the target UE is included in the LCS Area Event Report, the LCS Client is determined to not need a location estimate of the target UE.

Alternatively, the method further includes a step of a GMLC in the LCS system storing an indication for locating the target UE when the indication for locating the target UE (103) is included in the LCS Service Request In this case, the step of determining from the LCS Service Request whether the LCS Client needs a location estimate of the target UE includes:
the GMLC in the LCS system determining whether there is an indication for locating the target UE stored in the GMLC,
if there is an indication for locating the target UE stored in the GMLC, the LCS Client is determined to need a location estimate of the target UE; and
if there is no indication for locating the target UE stored in the GMLC, the LCS Client is determined not to need a location estimate of the target UE.

The target UE is located by the CN or the GMLC in LCS system.

The indication for locating the target UE is a locating indication which is used to request the LCS system to locate the target UE.

The indication for locating the target UE comprises QoS parameters in accordance with requirements of the target UE. And said locating target UE includes: locating the target UE according to the QoS parameters.

The location estimate of target UE is an obtained location estimate of the target UE or an error code indicating that the locating of the target UE is failed. Wherein the location estimate of target UE further includes a failure reason.

The LCS Area Event Report further carries information of the area where target UE is located.

The method further includes the following steps:
the LCS system determining whether the information of the area where the target UE is located provided by in the LCS Area Event Report meets predetermined requirements for locating the target UE which are set by the LCS Client;
the LCS system sending a LCS Area Event Invoke request with an instruction to provide the information of the area where the target UE is located to the target UE, if the information of the area where the target UE is located meets said predetermined requirements for locating the target UE;
the target UEstoring said instruction, upon receiving the LCS Area Event Invoke request;
the target UE returning an LCS Area Event Report with said information of the area where the target UE is located to LCS system, when the area event occurs; and
forwarding, by LCS system, the LCS Area Event Report with information of the area where the target UE is located to the LCS Client.

Said determining whether information of the area where target UE is located provided by target UE meets the requirements for locating the target UE includes determining whether information of the area where target UE is located provided by target UE meets the requirements ofQoS parameters carried in the LCS Service Request.

According to the method provided in the present invention, LCS Client can send a location request of change of area event i.e. an LCS Service Request with locating instruction to target UE, to request LCS system to provide location estimate of target UE while sending LCS area event report to LCS Client, so that while LCS system is providing LCS area event report of target UE to LCS Client, it can further provide specific location estimate of target UE on demand of LCS Client, consequently, LCS Client can not only learn about occurrence of trigger location report event of target UE, but also obtain specific location estimate of target UE. In addition, multi embodiments are provided in the present invention for flexible selections.

### Brief Description of the Drawings

Figure 1 is a schematic diagram illustrating logic structure for implementing location service;
Figure 2 is a message interaction drawing illustrating progress of location request of change of area event in existing technology;
Figure 3 is a flowchart illustrating progress of location request of change of area event in the present invention;
Figure 4 is a drawing illustrating message interaction of location request of change of area event in an embodiment of the present invention;
Figure 5 is a drawing illustrating message interaction of location request of change of area event in another embodiment of the present invention;
Figure 6 is a flowchart illustrating another progress of location request of change of area event in the present invention;
Figure 7 is a drawing illustrating message interaction of location request of change of area event in the third embodiment of the present invention.

### Embodiments of the Invention

The present invention will be described in detail hereinafter with reference to the accompanying drawings.

In the present invention, LCS Client sends a location request of change of area event i.e. an LCS Service Request to LCS system and the request thereof further carries a locating instruction to request LCS system to provide location estimate of target UE, when target UE detects that change of area event has occurred, after target UE returns the LCS area event report to LCS system, through determining whether the location request of change of area event carries a locating instruction, LCS system performs subsequent progress to the location request of change of area event.

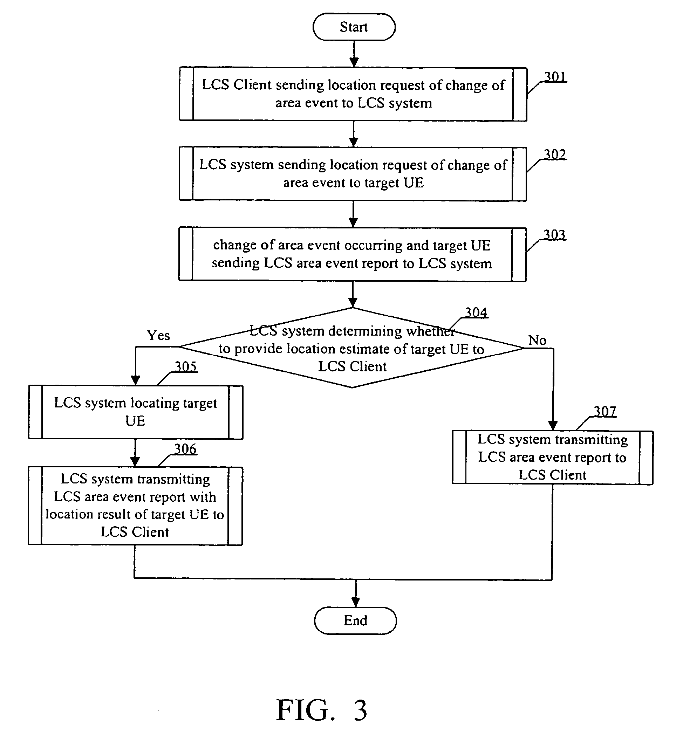

Figure 3 is a flowchart illustrating progress of location request of change of area event in the present invention, as shown in figure 3, progress of location request of change of area event comprises the following steps:
Step step 303: LCS Client sending a location request of change of area event i.e. an LCS Service Request to LCS system; after receiving the location request of change of area event, LCS system sends the location request of change of area event i.e. an LCS Area Event Invoke request to target UE; after receiving the location request of change of area event, target UE stores the change of area event carried in location request of change of area event. When detecting occurrence of change of area event, target UE will return LCS area event report to LCS system.
Step 304: after receiving the LCS area event report i.e. an LCS Area Event Report, LCS system will determine whether to provide location estimate of target UE to LCS Client, namely determining whether the location request of change of area event carries locating instruction, if yes, executing step 305; otherwise, executing step 307.
Step step 306: LCS system locates the target UE, then sends the LCS area event report i.e. an LCS Service Response with location estimate of target UE to LCS Client and ends the progress of location request of change of area event. If LCS system succeeds in locating target UE, it will send a LCS area event report with location estimate of target UE; if LCS system fails in locating target UE, it will send a LCS area event report with failure reason.
Step 307: after receiving LCS area event report, LCS system sends this LCS area event report i.e. an LCS Service Response to LCS Client.

After LCS system receives LCS area event report of target UE, there are two ways to determine whether to provide location estimate of target UE to LCS Client, one way is that target UE stores the locating instruction carried in location request of change of area event; the other way is that LCS system stores the locating instruction carried in location request of change of area event.

Target UE stores the locating instruction carried in location request of change of area event, it means that LCS system transmits all contents in location request of change of area event, which is sent by LCS Client, to target UE for storage. When detecting that change of area event has occurred, target UE will return LCS area event report to LCS system, according to relevant information of the stored location request of change of area event, target UE determines that this LCS area event report carries locating instruction from LCS Client, then LCS system will locate target UE according to the locating instruction carried in LCS area event report and return LCS area event report with location estimate of target UE to LCS Client at last.

LCS system stores the locating instruction carried in location request of change of area event, it means that after LCS system receives a location request of change of area event sent by LCS Client, it will store the locating instruction carried in this location request of change of area event, and then transmit other relevant contents of change of area event other than locating instruction carried in the location request of change of area event to target UE. When detecting that change of area event has occurred, target UE will return LCS area event report to LCS system, after receiving the LCS area event report, LCS system determines to provide location estimate of target UE to LCS Client according to self-stored relevant information of the location request of change of area event, then LCS system locates the target UE and returns LCS area event report with location estimate of target UE to LCS Client at last.

While a location request of change of area event carries locating instruction, it can further comprise relevant Quality of Service (QoS) parameters concerning location estimate of target UE, like locating precision, error range, response time, etc.

Specific procedure of the two ways will be described in detail hereinafter.

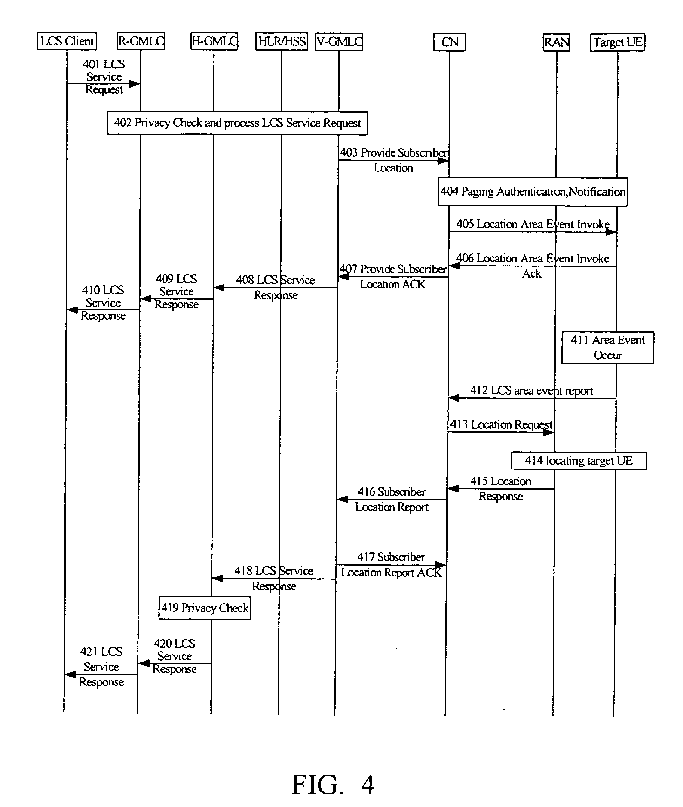

Figure 4 is a drawing illustrating message interaction of location request of change of area event in an embodiment of the present invention, as shown in figure 4, message interaction of location request of change of area event procedure comprises the following steps:
Step 401: LCS Client sends a LCS Service Request to R-GMLC, wherein this LCS Service Request carries target UE identifier, specified target area coverage and change of area event, thereby change of area event can be used to trigger report LCS area event report when target UE enters, leaves or is located in a specified area coverage; this LCS Service Request also carries locating instruction, which requests LCS system to provide location estimate of target UE while LCS system is sending LCS area event report to LCS Client, this LCS Service Request may further carry relevant QoS parameters concerning target UE location information, which indicates LCS Client's demand that LCS system provide location estimate of target UE; this LCS Service Request may carry effective time span, like start time and end time, as well as number of times for reporting LCS area event report on demand of LCS Service Request, if it is required to report LCS area event report multiply, this LCS Service Request needs to carry time interval for periodically reporting LCS area event report. This LCS Service Request is right the location request of change of area event.
Step 402∼step 404 are essentially the same as step 202∼step 204, just that each interactive message hereby carries a locating instruction and may further carry relevant QoS parameters concerning location estimate of target UE.
Step 405∼step 406: CN sends a Location Area Event Invoke request to target UE through RAN, wherein information carried in Location Area Event Invoke and that carried in LCS Service Request are corresponding. After receiving Location Area Event Invoke, target UE stores the specified target area coverage/ change of area event and locating instruction, if it is required to report LCS area event report multiply, target UE needs to store time interval for periodically reporting LCS area event report, if Location Area Event Invoke also carries relevant QoS parameters concerning locating instruction, target UE also needs to store the QoS parameters thereof, and then target UE starts up relevant application program of its own to monitor occurrence of change of area event; target UE sends a Location Area Event Invoke Ack to CN to notify CN that current location request of change of area event has been accepted and processed accordingly.
Step 407∼step 410 are essentially the same as step 207∼step 210.
Step 411∼step 412: when change of area event occurs, namely when UE enters, leaves or is located in a specified area coverage, target UE will send a LCS area event report to CN through RAN, wherein the LCS area event report carries locating instruction and may further carry Qos parameters, in order to notify CN that change of area event has occurred, and further notify CN to provide location estimate of target UE while CN is sending LCS area event report to LCS Client.
Step 413∼step 415: after receiving LCS area event report, according to the locating instruction carried in LCS area event report reported by UE, CN determines that LCS Client demands to be provided with location estimate of target UE besides sending LCS area event report to the LCS Client, so CN sends a Location Request to RAN for locating target UE, wherein the Location Request carries relevant QoS parameters concerning the locating operation; after receiving Location Request, RAN locates target UE according to requirements of QoS parameters, and then sends a Location Report with location estimate of target UE to CN. If RAN succeeds in locating target UE, it will send a Location Report with location estimate of target UE to CN; if RAN fails in locating target UE, it will send a Location Report with failure reason to CN. The said failure reason may be that requirements of QoS parameters cannot be satisfied, and so on.
Step 416: after receiving the Location Report with location estimate of target UE, CN will send a Subscriber Location Report of target UE with location estimate of target UE to V-GMLC, so as to notify V-GMLC that change of area event of target UE has occurred and target UE is located already.
Step 417∼step 421 are essentially the same as step 214∼step 218, just that each interactive message hereby carries location estimate of target UE
The said V-GMLC in step 411∼step 421 is a GMLC where target UE is currently located and which can cover the specified target area coverage, and the said V-GMLC hereby can be the same GMLC as that in step 402∼step 410, or be different ones otherwise; in the same way, the said CN in step 411∼step 421 is a CN where target UE is currently located and which can cover the specified target area coverage, and the said CN hereby can be the same CN as that in step step 410, or be different ones otherwise.

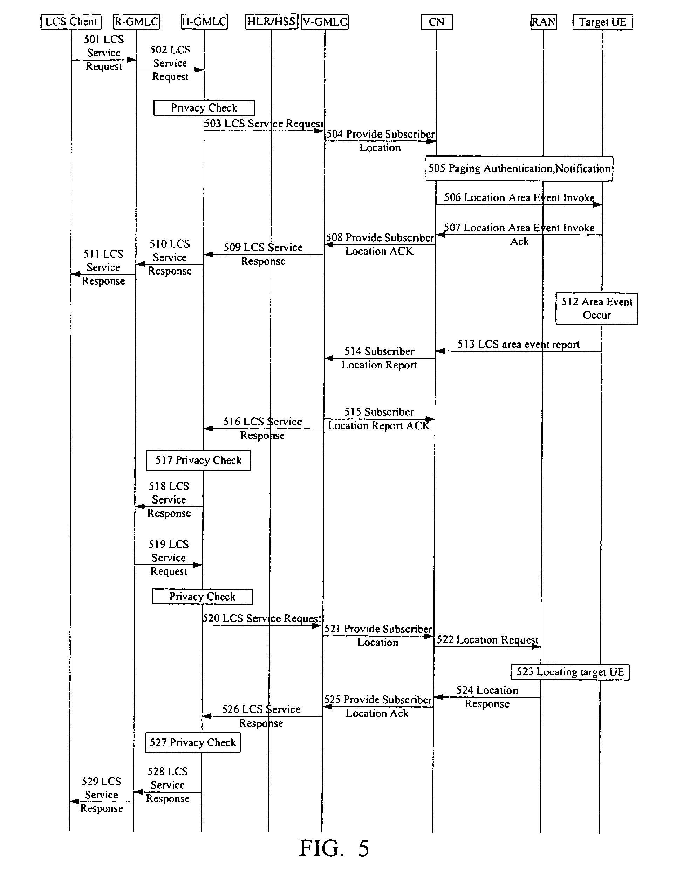

Figure 5 is a drawing illustrating message interaction of location request of change of area event in another embodiment of the present invention, as shown in figure 5, message interaction of location request of change of area event procedure comprises the following steps:
Step 501 is essentially the same as step 401.
Step 502∼step 503: after receiving LCS Service Request, R-GMLC stores the locating instruction and relevant QoS parameters carried in this LCS Service Request, and then forwards this LCS Service Request to H-GMLC, wherein H-GMLC will check legality authentication of LCS Client to determine whether target UE allows LCS system to provide location estimate of target UE to this LCS Client, if LCS Client passes the legality authentication check, H-GMLC will send LCS Service Request to V-GMLC, wherein this LCS Service Request does not carry locating instruction or relevant QoS parameters; otherwise, H-GMLC will return legality authentication check failed response, R-GMLC will reject the location request of change of area event toward target UE and end current process of location request of change of area event.
Step 504∼step 518 are essentially the same as step 203∼step 217.
Step 519∼step 523: after receiving LCS Service Request, according to the storing locating instruction carried in the LCS Service Request, R-GMLC determines that LCS Client demands LCS system to provide location estimate of target UE besides sending LCS area event report to it, so R-GMLC generates an instant mode location information request, namely LCS Service Request, and sends this LCS Service Request to H-GMLC, wherein this LCS Service Request carries target UE identifier and location-relevant QoS parameters, to request to locate target UE. After receiving LCS Service Request, H-GMLC may further check legality authentication of LCS Client to determine whether target UE allows LCS system to provide location estimate of target UE to this LCS Client, if LCS Client passes the legality authentication check, H-GMLC will send LCS Service Request to V-GMLC, after receiving the LCS Service Request, V-GMLC will send Provide Subscriber Location to CN, wherein the Provide Subscriber Location carries target UE identifier and location-relevant QoS parameters. After receiving Provide Subscriber Location, CN sends Location Request to corresponding RAN, wherein the Location Request carries target UE identifier and location-relevant QoS parameters; after receiving Location Request, RAN locates target UE according to requirement of QoS parameters, and then sends a Location Report with location estimate of target UE to CN. If RAN succeeds in locating target UE, it will send a Location Report with location estimate of target UE to CN; if RAN fails in locating target UE, it will send a Location Report with failure reason to CN.
Step 524∼step 529 are essentially the same as step 416∼step 421.

The said V-GMLC in step 511∼step 529 is a GMLC where target UE is currently located and which can cover the specified target area coverage, and the said V-GMLC hereby can be the same GMLC as that in step 502∼step 510, or be different ones otherwise; in the same way, the said CN in step 511∼step 529 is a CN where target UE is currently located and which can cover the specified target area coverage, and the said CN hereby can be the same CN as that in step 502∼step 510, or be different ones otherwise.

In the above procedure, the locating instruction carried in location request of change of area event can also be stored in H-GMLC and then H-GMLC locates target UE.

In the above procedure, the location request of change of area event, which is sent by LCS Client to LCS system, may not carry locating instruction, and target UE provides more of its own information while reporting LCS area event report, for instance, such as information of the area coverage where target UE is located, LCS system provides the information from target UE to LCS Client while sending LCS area event report to LCS Client.

Because target UE can obtain some information of the area coverage where target UE is located, such as Cell ID, Location Area and so on, LCS Client requests target UE to provide location estimate of target UE besides sending LCS area event report to it, in this way, LCS system can prejudges whether information of the area coverage where target UE is located obtained by target UE can satisfy quality of service requirement demanded by LCS Client, if yes, LCS system can demand target UE to provide information of the area coverage where target UE is located besides to report LCS area event report, ant then while LCS system is sending LCS area event report to LCS Client, it will also provide information of the area coverage where target UE is located to LCS Client; otherwise, LCS system can choose any processing way of the above two.

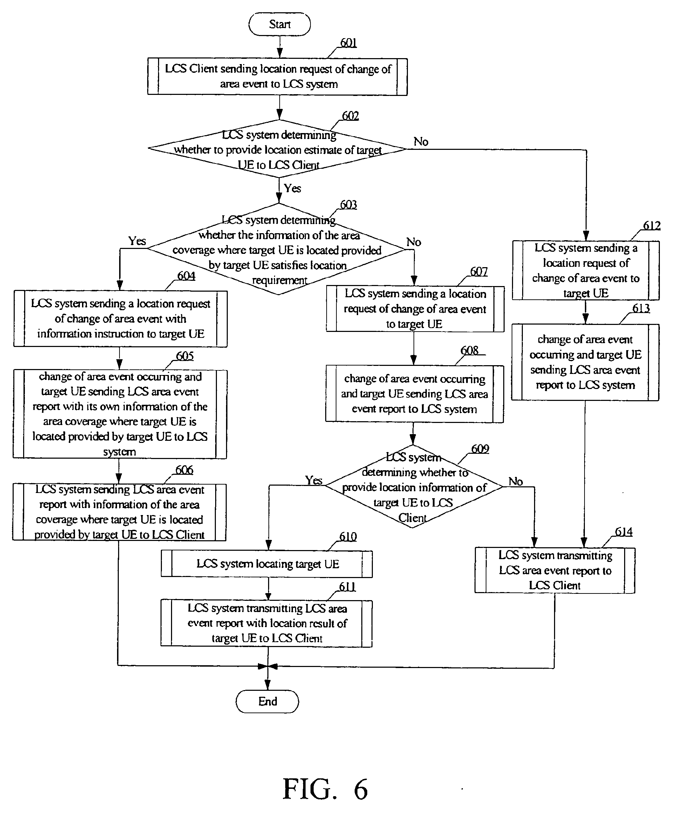

Figure 6 is a flowchart illustrating another progress of location request of change of area event in the present invention, as shown in figure 6, message interaction of location request of change of area event procedure comprises the following steps:
Step 601∼step 602: LCS Client sends a location request of change of area event i.e. an LCS Service Request to LCS system; after receiving the location request of change of area event, LCS system determines whether to provide location estimate of target UE to LCS Client, namely determining whether the location request of change of area event started toward target UE by LCS Client carries locating instruction, if yes, executing step 603; otherwise, executing step 612.
Step 603: LCS system determines whether the information of area coverage where target UE is located provided by target UE can satisfy locating requirement of LCS Client, if yes, executing step 604; otherwise, executing step 607.
Step 604∼steep 606: LCS system sends a location request of change of area event with locating instruction i.e. an LCS Area Event Invoke request to target UE; after receiving the location request of change of area event, target UE stores change of area event and information indication carried in the location request of change of area event. When detecting occurrence of change of area event, target UE returns a LCS area event report i.e. an LCS Area Event Report with information of area coverage where it is located to LCS system, LCS system sends the LCS area event report with information of area coverage where target UE is located to LCS Client and ends current process toward location request of change of area event.
Step 607∼step 609: after receiving the location request of change of area event, LCS system sends the location request of change of area event i.e, an LCS Area Event Invoke request to target UE; after receiving the location request of change of area event, target UE stores change of area event carried in the location request of change of area event. When detecting occurrence of change of area event, target UE returns the LCS area event report i.e. an LCS Area Event Report to LCS system. After receiving the LCS area event report, LCS system determines whether to provide location estimate of target UE to LCS Client, namely determining whether the location request of change of area event started toward target UE by LCS Client carries locating instruction, if yes, executing step 610; otherwise, executing step 614.
Step 610∼step 611: LCS system locates target UE, sends the LCS area event report i.e. an LCS Service Response with location estimate of target UE to LCS Client and then ends current process toward the location request of change of area event. If LCS system succeeds in locating target UE, it will send a LCS area event report with location estimate of target UE to LCS Client; if LCS system fails in locating target UE, it will send a LCS area event report with failure reason to LCS Client.
Step 612∼step 611: after receiving the location request of change of area event, LCS system sends the location request of change of area event i.e. an LCS Area Event Invoke request to target UE; after receiving the location request of change of area event, target UE stores change of area event carried in the location request of change of area event. When detecting occurrence of change of area event, target UE returns the LCS area event report i.e. an LCS Area Event Report to LCS system and then step 614 is executed.
Step 614: after receiving the LCS area event report, LCS system sends the LCS area event report i.e. an LCS Service Response to the LCS Client.

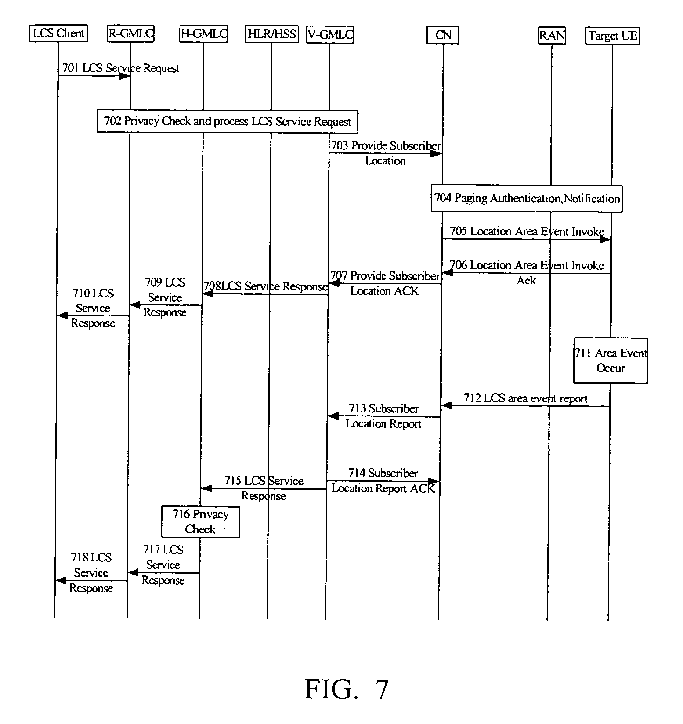

Figure 7 is a drawing illustrating message interaction of location request of change of area event in the third embodiment of the present invention, as shown in figure 7, message interaction of location request of change of area event procedure comprises the following steps:
Step 701 is essentially the same as step 401.
Step 702: after receiving LCS Service Request, R-GMLC forwards this LCS Service Request to H-GMLC, H-GMLC checks legality authentication of LCS Client to determine whether target UE allows LCS system to provide location estimate of target UE to this LCS Client, if LCS Client passes the legality authentication check, H-GMLC will send LCS Service Request to V-GMLC, in this step, R-GMLC or H-GMLC or V-GMLC figures out that information of area coverage where target UE is located provided by target UE can satisfy locating requirement of LCS Client toward target UE, for instance, it is figured out that information of area coverage where target UE is located provided by target UE can meet QoS parameter requirement carried in LCS Service Request, then step 703 will be executed; if R-GMLC or H-GMLC or V-GMLC figures out that information of area coverage where target UE is located provided by target UE cannot satisfy locating requirement of LCS Client toward target UE, R-GMLC or H-GMLC or V-GMLC will follow the step 403∼step 421 or step step 526 to process the location request of change of area event which is started toward target UE by LCS Client. If LCS Client does not pass the legality authentication check, H-GMLC will return legality authentication check failed response to R-GMLC, then R-GMLC will reject the location request of change of area event toward target UE and end current process of location request of change of area event.
Step 703∼step 704 are essentially the same as step 203∼step 204, just that each interactive message hereby carries information indication that requests target UE to provide information of area coverage where it is located.
Step 705: CN sends Location Area Event Invoke to target UE through RAN, wherein information carried in this Location Area Event Invoke and that carried in LCS Service Request are corresponding, and information indication is further comprised thereof. After receiving the Location Area Event Invoke, target UE stores the information indication and starts up its own relevant application program to monitor occurrence of change of area event.
Step 706∼step 710 are essentially the same as step 206∼step 210.
Step 711∼step 712: when change of area event occurs, namely when target UE enters, leaves or is located in the specified target area coverage, target UE will send a LCS area event report to CN through RAN, wherein this LCS area event report carries information of the area coverage where target UE is located, to notify CN that change of area event has occurred, and then provides information of the area coverage where target UE is located to CN.
Step 713∼step 718 are essentially the same as step 213∼step 218, just that each message carries information of the area coverage where target UE is located.

The said V-GMLC in step 711∼step 718 is a GMLC where target UE is currently located and which can cover the specified target area coverage, and the said V-GMLC hereby can be the same GMLC as that in step 702∼step 710, or be different one otherwise; in the same way, the said CN in step 711~step 718 is a CN where target UE is currently located and which can cover the specified target area coverage, and the said CN hereby can be the same CN as that in step 702∼step 710, or be different one otherwise.

To sum up, the above description is just preferable embodiments of the present invention, not used to confine protection scope of the present invention.

## Claims

1. A method for processing a location service <LCS> Service Request, comprising:
an LCS system sending (405, 506, 705) an LCS Area Event Invoke request for detecting a predetermined area event, said request being sent to a target user equipment (UE) (103) upon receiving an LCS Service Request from an LCS client (101);
the target UE (103)returning (412, 513, 712) an LCS Area Event Report to the LCS system (102) when the predetermined area event occurs;
**characterized in that** the method further comprises:
the LCS system (102) determining from the LCS Service Request or the LCS Area Event Report whether the LCS Client (101) needs a location estimate of the target UE (103), after receiving the LCS Area Event Report; and
the LCS system (102) sending to the LCS Client (101), an LCS Service Response indicating that the predetermined area event occurs, if the LCS Client (101) does not need a location estimate of the target UE (103); or
the LCS system (102) locating (414, 523) the target UE (103) and sending (421, 529, 718) an LCS Service Response with a location estimate of the target UE (103) to the LCS Client (101) if the LCS Client (101) needs a location estimate of the target UE (103).

2. according to claim 1, wherein said determining from the LCS Area Event Report whether the LCS Client (101) needs a location estimate of the target UE (103) comprises:
a core network <CN> in the LCS system (102) determining whether an indication for locating the target UE (103) is included in the LCS Area Event Report returned by the target UE (103);
if an indication for locating the target UE (103) is included in the LCS Area Event Report, the LCS Client (101) is determined to need a location estimate of the target UE (103); and
if no indication for locating the target UE (103) is included in the LCS Area Event Report, the LCS Client (101) is determined to not need a location estimate of the target UE (103).

3. The method according to claim 2, wherein the target UE (103) is located by the CN in the LCS system (102).

4. The method according to claim 1, further comprising:
a gateway mobile location center (GMLC) in the LCS system (102) storing an indication for locating the target UE (103) when the indication for locating the target UE (103) is included in the LCS Service Request; wherein
determining from the LCS Service Request whether the LCS Client (101) needs a location estimate of the target UE (103) comprises:
the GMLC determining whether there is an indication for locating the target UE (103) stored in the GMLC,
if there is an indication for locating the target UE (103) stored in the GMLC, the LCS Client (101) is determined to need a location estimate of the target UE (103); and
if there is no indication for locating the target UE (103) stored in the GMLC, the LCS Client (101) is determined to not need a location estimate of the target UE (103).

5. The method according to claim 4, wherein the target UE (103) is located by the GMLC in the LCS system (102).

6. The method according to any one of claims 2 to 5, wherein the indication for locating the target UE (103) is a locating indication which is used to request the LCS system (102) to locate the target UE (103).

7. The method according to claim 6, wherein the indication for locating the target UE comprises Quality of Service (QoS) parameters in accordance with requirements of the target UE (103).

8. The method according to claim 7, wherein said locating target UE (103) comprises locating the target UE (103) according to the QoS parameters.

9. The method according to any one of claims 1 to 8, wherein the location estimate of target UE (103) is an obtained location estimate of the target UE (103).

10. The method according to any one of claims 1 to 8, wherein said location estimate of target UE (103) is an error code indicating that the locating of the target UE (103) is failed.

11. The method according to claim 10, wherein the location estimate of target UE (103) further comprises a failure reason.

12. The method according to claim 1, wherein the LCS Area Event Report further carries information on the area where target UE (103) is located.

13. The method according to claim 12, further comprising:
the LCS system (102) determining whether the information of the area where the target UE (103) is located provided by in the LCS Area Even Report meets predetermined requirements for locating the target UE (103) set by the LCS Client (101);
the LCS system (102) sending (705), a LCS Area Event Invoke request with an instruction to provide the information of the area where the target UE (103) is located to the target UE (103), if the information of the area where the target UE (103) is located, meets said predetermined requirements for locating the target UE (103);
the target UE (103) storing said instruction, upon receiving the LCS Area Event Invoke request;
the target UE (103) returning (712), an LCS Area Event Report with said information of the area where the target UE (103) is located to LCS system (102), when the area event occurs; and
the LCS system (102) sending (718) an LCS Service Response with said information of the area where the target UE (103) is located to the LCS Client (101).

14. The method according to claim 13, wherein said determining whether information of the area where target UE (103) is located provided by target UE (103) meets the requirements for locating the target UE (103) comprises;
determining whether information of the area where target UE (103) is located provided by target UE (103) meets requirements of QoS parameters carried in the LCS Service Request.

## Patentansprüche

1. Verfahren zum Verarbeiten einer Ortungsdienst(LCS)-Dienstanforderung, umfassend:
ein LCS-System sendet (405, 506, 705) eine LCS-Area-Event-Invoke-Anforderung zum Detektieren eines vorbestimmten Area-Events, wobei die Anforderung an ein Zielbenutzergerät (UE) (103) gesendet wird, nachdem eine LCS-Dienstanforderung von einem LCS-Client (101) empfangen wurde;
das Ziel-UE (103) leitet (412, 513, 712) einen LCS-Area-Event-Report zurück an das LCS-System (102), wenn das vorbestimmte Area-Event eintritt;
**dadurch gekennzeichnet, dass** das Verfahren außerdem umfasst:
das LCS-System (102) bestimmt aus der LCS-Dienstanforderung oder dem LCS-Area-Event-Report, ob der LCS-Client (101) nach Empfang des LCS-Area-Event-Reports eine Ortsschätzung des Ziel-UE (103) benötigt; und
das LCS-System (102) sendet dem LCS-Client (101) eine LCS-Dienstantwort, die angibt, dass das vorbestimmte Area-Event eintritt, falls der LCS-Client (101) keine Ortsschätzung des Ziel-UE (103) benötigt; oder
das LCS-System (102) ortet (414, 523) das Ziel-UE (103) und sendet (421, 529, 718) eine LCS-Dienstantwort mit einer Ortsschätzung des Ziel-UE (103) an den LCS-Client (101), falls der LCS-Client (101) eine Ortsschätzung des Ziel-UE (103) benötigt.

2. Verfahren nach Anspruch 1, worin das Bestimmen aus dem LCS-Area-Event-Report, ob der LCS-Client (101) eine Ortsschätzung des Ziel-UE (103) benötigt, Folgendes umfasst:
ein Kernnetz <CN> im LCS-System (102) bestimmt, ob eine Anzeige zur Ortung des Ziel-UE (103) im vom Ziel-UE (103) zurückgeleiteten LCS-Area-Event-Report enthalten ist;
falls eine Anzeige zur Ortung des Ziel-UE (103) im LCS-Area-Event-Report enthalten ist, wird bestimmt, dass der LCS-Client (101) eine Ortsschätzung des Ziel-UE (103) benötigt; und
falls keine Anzeige zur Ortung des Ziel-UE (103) im LCS-Area-Event-Report enthalten ist, wird bestimmt, dass der LCS-Client (101) keine Ortsschätzung des Ziel-UE (103) benötigt.

3. Verfahren nach Anspruch 2, worin das Ziel-UE (103) vom CN im LCS-System (102) geortet wird.

4. Verfahren nach Anspruch 1, außerdem umfassend:
ein Gateway-Mobilfunk-Ortungszentrum (GMLC) im LCS-System (102), das eine Anzeige zum Orten des Ziel-UE (103) speichert, wenn die Anzeige zum Orten des Ziel-UE (103) in der LCS-Dienstanforderung enthalten ist; worin
das Bestimmen aus der LCD-Dienstanforderung, ob der LCS-Client (101) eine Ortsschätzung des Ziel-UE (103) benötigt, Folgendes umfasst:
das GMLC bestimmt, ob es eine im GMLC gespeicherte Anzeige zum Orten des Ziel-UE (103) gibt,
falls es eine im GMLC gespeicherte Anzeige zum Orten des Ziel-UE (103) gibt, wird bestimmt, dass der LCS-Client (101) eine Ortsschätzung des Ziel-UE (103) benötigt; und
falls es keine im GMLC gespeicherte Anzeige zum Orten des Ziel-UE (103) gibt, wird bestimmt, dass der LCS-Client (101) keine Ortsschätzung des Ziel-UE (103) benötigt.

5. Verfahren nach Anspruch 4, worin das Ziel-UE (103) durch das GMLC im LCS-System (102) geortet wird.

6. Verfahren nach einem der Ansprüche 2 bis 5, worin die Anzeige zum Orten des Ziel-UE (103) eine Ortungsanzeige ist, die dazu benutzt wird, um das LCS-System (102) zu ersuchen, das Ziel-UE (103) zu orten.

7. Verfahren nach Anspruch 6, worin die Anzeige zum Orten des Ziel-UE Dienstgüte(QoS)-Parameter gemäß den Anforderungen des Ziel-UE (103) umfasst.

8. Verfahren nach Anspruch 7, worin das Orten des Ziel-UE (103) das Orten des Ziel-UE (103) gemäß den QoS-Parametern umfasst.

9. Verfahren nach einem der Ansprüche 1 bis 8, worin die Ortsschätzung des Ziel-UE (103) eine erhaltene Ortsschätzung des Ziel-UE (103) ist.

10. Verfahren nach einem der Ansprüche 1 bis 8, worin die Ortsschätzung des Ziel-UE (103) ein Fehlercode ist, der angibt, dass das Orten des Ziel-UE (103) versagt hat.

11. Verfahren nach Anspruch 10, worin die Ortsschätzung des Ziel-UE (103) außerdem einen Fehlergrund umfasst.

12. Verfahren nach Anspruch 1, worin der LCS-Area-Event-Report außerdem Information über den Bereich trägt, wo das Ziel-UE (103) geortet ist.

13. Verfahren nach Anspruch 12, außerdem umfassend:
das LCS-System (102) bestimmt, ob die Information über den Bereich, wo das Ziel-UE (103) geortet ist, die im LCS-Area-Event-Report bereitgestellt ist, vom LCS-Client (101) festgesetzte vorbestimmte Anforderungen für das Orten des Ziel-UE (103) erfüllt;
das LCS-System (102) sendet (705) eine LCS-Area-Event-Invoke-Anforderung mit einer Anweisung, die Information über den Bereich, wo das Ziel-UE (103) geortet ist, an das Ziel-UE (103) zu liefern, falls die Information über den Bereich, wo das Ziel-UE (103) geortet ist, die vorbestimmten Anforderungen zum Orten des Ziel-UE (103) erfüllt;
das Ziel-UE (103) speichert diese Anweisung nach Empfang der LCS-Area-Event-Invoke-Anforderung;
das Ziel-UE (103) leitet (712) einen LCS-Area-Event-Report mit der Information über den Bereich, wo das Ziel-UE (103) geortet ist, zurück an das LCS-System (102), wenn das Area-Event eintritt; und
das LCS-System (102) sendet (718) eine LCS-Dienstantwort mit dieser Information über den Bereich, wo das Ziel-UE (103) geortet ist, an den LCS-Client (101).

14. Verfahren nach Anspruch 13, worin das Bestimmen, ob vom Ziel-UE (103) bereitgestellte Information über den Bereich, wo das Ziel-UE (103) geortet ist, die Anforderungen zum Orten des Ziel-UE (103) erfüllt, Folgendes umfasst:
Bestimmen, ob vom Ziel-UE (103) bereitgestellte Information über den Bereich, wo das Ziel-UE (103) geortet ist, Anforderungen von QoS-Parametern erfüllt, die in der LCS-Dienstanforderung getragen werden.

## Revendications

1. Procédé pour traiter une demande de service de service de localisation <LCS>, comprenant :
un système LCS envoyant (405, 506, 705) une demande d'invocation d'événement de zone LCS pour détecter un événement de zone prédéterminé, ladite demande étant envoyée à un équipement d'utilisateur cible (UE) (103) après réception d'une demande de service LCS d'un client LCS (101) ;
l'équipement UE cible (103) renvoyant (412, 513, 712) un rapport d'événement de zone LCS au système LCS (102) lorsque l'événement de zone prédéterminé a lieu ;
**caractérisé en ce que** le procédé comprend en outre :
le système LCS (102) déterminant à partir de la demande de service LCS ou du rapport d'événement de zone LCS si le client LCS (101) a besoin d'une estimation d'emplacement de l'équipement UE cible (103), après réception du rapport d'événement de zone LCS ; et
le système LCS (102) envoyant au client LCS (101) une réponse de service LCS indiquant que l'événement de zone prédéterminé a lieu, si le client LCS (101) n'a pas besoin d'une estimation d'emplacement de l'équipement UE cible (103) ; ou
le système LCS (102) localisant (414, 523) l'équipement UE cible (103) et envoyant (421, 529, 718) une réponse de service LCS avec une estimation d'emplacement de l'équipement UE cible (103) au client LCS (101) si le client LCS (101) a besoin d'une estimation d'emplacement de l'équipement UE cible (103).

2. Procédé selon la revendication 1, dans lequel ladite détermination à partir du rapport d'événement de zone LCS si le client LCS (101) a besoin d'une estimation d'emplacement de l'équipement UE cible (103) comprend :
un réseau de noyau <CN> dans le système LCS (102) déterminant si une indication pour localiser l'équipement UE cible (103) est incluse dans le rapport d'événement de zone LCS renvoyé par l'équipement UE cible (103) ;
si une indication pour localiser l'équipement UE cible (103) est incluse dans le rapport d'événement de zone LCS, il est déterminé que le client LCS (101) a besoin d'une estimation d'emplacement de l'équipement UE cible (103) ; et
si aucune indication pour localiser l'équipement UE cible (103) n'est incluse dans le rapport d'événement de zone LCS, il est déterminé que le client LCS (101) n'a pas besoin d'une estimation d'emplacement de l'équipement UE cible (103).

3. Procédé selon la revendication 2, dans lequel l'équipement UE cible (103) est localisé par le CN dans le système LCS (102).

4. Procédé selon la revendication 1, comprenant en outre :
un centre de localisation mobile passerelle (GMLC) dans le système LCS (102) mémorisant une indication pour localiser l'équipement UE cible (103) lorsque l'indication pour localiser l'équipement UE cible (103) est incluse dans la demande de service LCS ; dans lequel
la détermination à partir de la demande de service LCS si le client LCS (101) a besoin d'une estimation d'emplacement de l'équipement UE cible (103) comprend :
le GMLC déterminant s'il y a une indication pour localiser l'équipement UE cible (103) mémorisée dans le GMLC,
s'il y a une indication pour localiser l'équipement UE cible (103) mémorisée dans le GMLC, il est déterminé que le client LCS (101) a besoin d'une estimation d'emplacement de l'équipement UE cible (103) ; et
s'il n'y a aucune indication pour localiser l'équipement UE cible (103) mémorisée dans le GMLC, il est déterminé que le client LCS (101) n'a pas besoin d'une estimation d'emplacement de l'équipement UE cible (103).

5. Procédé selon la revendication 4, dans lequel l'équipement UE cible (103) est localisé par le GMLC dans le système LCS (102).

6. Procédé selon l'une quelconque des revendications 2 à 5, dans lequel l'indication pour localiser l'équipement UE cible (103) est une indication de localisation qui est utilisée pour demander au système LCS (102) de localiser l'équipement UE cible (103).

7. Procédé selon la revendication 6, dans lequel l'indication pour localiser l'équipement UE cible comprend des paramètres de qualité de service (QoS) selon les spécifications de l'équipement UE cible (103).

8. Procédé selon la revendication 7, dans lequel ladite localisation de l'équipement UE cible (103) comprend la localisation de l'équipement UE cible (103) conformément aux paramètres de QoS.

9. Procédé selon l'une quelconque des revendications 1 à 8, dans lequel l'estimation d'emplacement d'équipement UE cible (103) est une estimation d'emplacement obtenue de l'équipement UE cible (103).

10. Procédé selon l'une quelconque des revendications 1 à 8, dans lequel ladite estimation d'emplacement d'équipement UE cible (103) est un code d'erreur indiquant que la localisation de l'équipement UE cible (103) a échoué.

11. Procédé selon la revendication 10, dans lequel l'estimation d'emplacement d'équipement UE cible (103) comprend en outre une raison d'échec.

12. Procédé selon la revendication 1, dans lequel le rapport d'événement de zone LCS contient en outre des informations concernant la zone où l'équipement UE cible (103) est situé.

13. Procédé selon la revendication 12, comprenant en outre :
le système LCS (102) déterminant si les informations de la zone où l'équipement UE cible (103) est situé fournies par le rapport d'événement de zone LCS satisfont des spécifications prédéterminées pour localiser l'équipement UE cible (103) définies par le client LCS (101) ;
le système LCS (102) envoyant (705) une demande d'invocation d'événement de zone LCS avec une instruction de fournir les informations de la zone où l'équipement UE cible (103) est situé à l'équipement UE cible (103), si les informations de la zone où l'équipement UE cible (103) est situé satisfont lesdites spécifications prédéterminées pour localiser l'équipement UE cible (103) ;
l'équipement UE cible (103) mémorisant ladite instruction, après réception de la demande d'invocation d'événement de zone LCS ;
l'équipement UE cible (103) renvoyant (712) un rapport d'événement de zone LCS avec lesdites informations de la zone où l'équipement UE cible (103) est situé au système LCS (102), lorsque l'événement de zone a lieu ; et
le système LCS (102) envoyant (718) une réponse de service LCS avec lesdites informations de la zone où l'équipement UE cible (103) est situé au client LCS (101).

14. Procédé selon la revendication 13, dans lequel ladite détermination si les informations de la zone où l'équipement UE cible (103) est situé fournies par l'équipement UE cible (103) satisfont les spécifications pour localiser l'équipement UE cible (103) comprend :
la détermination si les informations de la zone où l'équipement UE cible (103) est situé fournies par l'équipement UE cible (103) satisfont les spécifications de paramètres QoS contenus dans la demande de service LCS.
